# EUROPEAN PATENT SPECIFICATION

(11) **EP 2 160 146 B1**
(45) Date of publication and mention of the grant of the patent: **05.12.2012**
(21) Application number: 08763637.9
(22) Date of filing: 26.06.2008
(51) Int. Cl.: A61C 15/04

(54) **FLOSSING DEVICE**
ZAHNSEIDENVORRICHTUNG
DISPOSITIF DE FIL DENTAIRE

(30) Priority: 28.06.2007 US 946732 P
(43) Date of publication of application: 10.03.2010
(73) Proprietor: Kazes, Erez Benn, 46309 Herzliya (IL)
(72) Inventor: Kazes, Erez Benn, 46309 Herzliya (IL)
(74) Representative: Becker Kurig Straus
(86) International application number: PCT/IL2008/000881
(87) International publication number: WO 2009/001363

(56) References cited:
- WO-A1-92/06648
- GB-A- 2 349 338
- US-A- 3 942 539
- US-A- 5 022 417
- US-A- 5 022 417
- US-A- 5 799 673
- US-A- 5 947 132
- US-A- 5 947 132
- US-A1- 2001 029 962
- US-A1- 2003 230 319
- US-B1- 6 340 027

## Description

### Field of the Invention

The present invention relates to a flossing device comprising a dental floss in the shape of the numeral eight, and a gripping portion, for flossing teeth.

### Background of the Invention

Dental floss has been found to be useful in controlling gum diseases, reducing bad breath, and helping in plaque removal. Therefore, it is logical that more and more people look for a method for using floss which has a more effective flossing action and is more comfortable to use.

Over time many different approaches and techniques have been used in the development of floss devices. The prior art relates to the development of many devices, ranging from simple spool-like products to complex floss applicators comprising storage chambers.

Two types of inter-dental cleaning devices exist: the first are hard devices, such as tooth-picks; and the second are dental filament devices, such as dental floss and products comprising it.

The use of floss holders consisting basically of common structural designs with (mainly) a single linear floss, is well known in the art.

US 5,947,132 discloses an individual flossing loop, and a cascade of said loops, which may be easily detached from one another. US 3,942,539 relates to a dental floss comprised of a first portion of conventional dental floss, and a thicker second portion having means for retaining antiseptics. US 5,022,417 relates to a flossing mouthpiece for simultaneously flossing a plurality of spaces between adjacent teeth. US 2001/0029962 relates to a dental floss that has a high strength inner core and an outer layer or wrapped sheath. US 6,340,027 relates to an extensible monofilament dental floss, which undergoes a permanent deformation prior to use. US 2003/0230319 relates to a flavor-enhanced dental floss that provides a long lasting release of flavor and/or additional chemicals for providing supplementary therapeutic or cosmetic effects.

Only few publications relate to further unique possibilities. Among them, US 5,970,992 relates to a dental flossing device comprising an elongated arched bow with two integrated floss loops stretched between the arch hands. GB 2349338 relates to an inter-dental cleaning filament comprising one or more closed floss loops. US 4,332,559 relates to a U-shaped dental floss device having a plurality of parallel flosses.

All of the known flossing devices of the prior art are disadvantageous in that they need to be maneuvered, thus making them uncomfortable to use, they are time consuming and they have limited effectiveness/surface contact.

It is, thus, an object of the present invention to provide a new dental flossing device which has the advantages of the well-known existing flossing devices together with additional novel features, resulting in a device with superior flossing action. The device of the invention fills the inter-proximal space most efficiently hence the efficiency of the floss is improved, while minimizing the users handling. The novel features of the device include, but are not limited to, relatively easy development, easy & cheap manufacturing, distinctively improving the teeth surface area contact and is ergonomically advantageous.

It is another object of this invention to provide a novel dental flossing device, comprising a floss portion in the shape of the numeral eight and a gripping or maneuvering extension portion, for removing food and debris from between teeth and crowns, and for delivering medical and/or cosmetic agents to the inter-proximal spaces.

In yet another object of this invention, the flossing portion rotates, via a connector that connects it to the gripping or maneuvering extension potion, as it works in the inter-proximal space between adjacent teeth.

It is another object of this invention to provide a method for producing said flossing device.

Other objects and advantages of present invention will appear as description proceeds.

### Summary of the Invention

The invention provides a flossing device for cleaning inter-proximal teeth spaces, comprising an elastic dental floss in the shape of the numeral eight, and a gripping or maneuvering extension portion, said floss returning to its shape after being pushed or pulled through said inter-proximal spaces. Said floss is preferably impregnated with a substance selected from the group consisting of a strong flavor substance, an antiseptic, a gingivitis affecting agent, a supporting agent for quitting smoking, a fluoride, a breath freshener, a pH modifier, a tooth whitener, and/or any other therapeutic substance. Said substance is released from the floss during the flossing action. The device, in a preferred embodiment, comprises a plurality of dental floss portions; a dental comb, in which the floss portions are mounted upon; a gripping portion; and optionally a means for delivering a flavor and/or a therapeutic substance to the oral cavity; wherein said dental floss portions are in the shape of the numeral eight. The therapeutic substance may include at least one of nicotine based therapeutic drug, a fluoride-based tooth enamel hardener, a breath freshener, a base for neutralizing stomach acid, a stomach acid inhibitor, anti-gingivitis medicament and a tooth enamel whitener. Said floss portion may be made of a polymer selected from acrylics, polyolefins, polyesters, polyamides, polycarbonates, halogenated polyolefins, cellulose and mixtures thereof; non-limitative examples may comprise polymethyl methacrylate, polyethylene, polypropylene, polycaprolactone, nylon, polycarbonate, PTFE, etc. Said floss portion may be coated with microcrystalline wax. Into said wax, incorporated may be active components, such as anti-caries, anti-plaque, antibacterial, or various dentally acceptable agents such as polishing and abrasive agents, etc.

Known methods may be employed when manufacturing the floss portion of the device, and the gripping portion. The floss portion may be manufactured by including any process that manipulates a single/multiple thread/s to the figure eight and then thermally fixing it, or a method that stamps out the figure eight and then further treating or using the appropriate glue to create the desired figure. Said device may optionally be formed from an injection molded plastic. The floss portion and/or the grip portion may be coated with a reinforcement material. In a preferred embodiment said reinforcing material comprises Kevlar®. The junction area in the shape of said numeral eight, namely the area at which two apparent loops of said numeral "8" meet, may comprise glue bonding two threads, and/or reinforcing the area, for example with a wire portion. Said junction area may be coated with a layer, such as a plastic layer or a membrane.

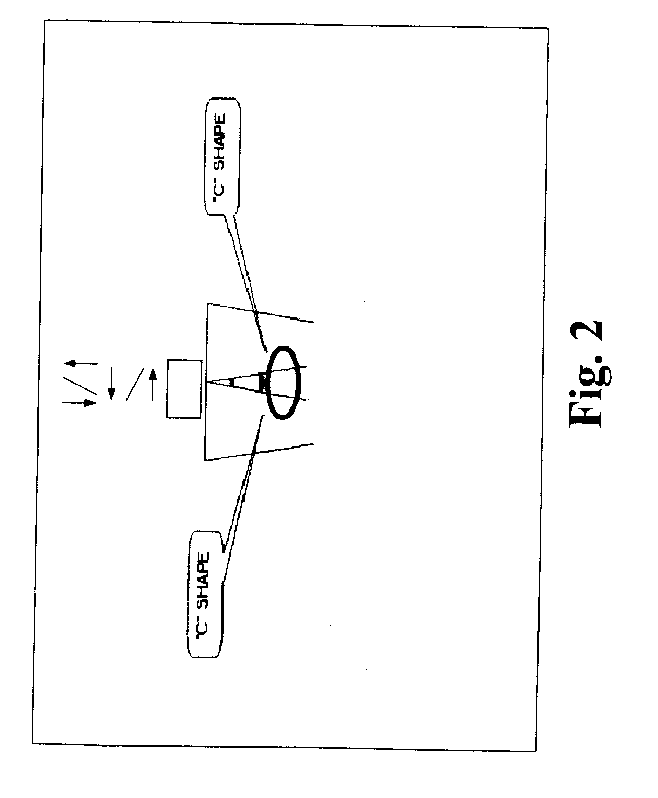

The junction area of the device of the invention has multiple functions: i) to penetrate the interproximal space of two adjacent teeth; and ii) to abut against the contour of teeth surface area so as to address any contour created by different interproximal spaces of different teeth (adjacent front teeth will create a different contour surface area than adjacent molers). This is effect is enhanced by different add-ons to the junction area that do not impede the penetration of the interproximal space and which abut against different surface area contours (see e.g. Figures 2-4, 8 and 10). Additionally, the scraping/friction action due to the double axe shape of the device of the invention against the front or back of the teeth, enables flossing of the inter proximal space and beyond.

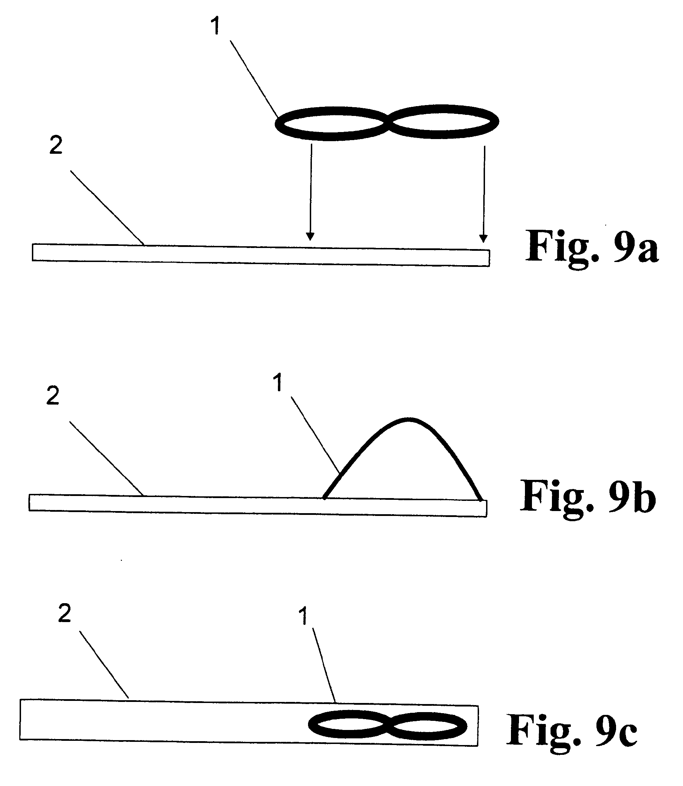

For each embodiment of the flossing device of the invention there may be a preferred production method and material/s used; e.g. when producing the flossing device as described in Figure 9, the production method and materials used should be chosen from those that will provide the device with high spring like characteristics.

The invention relates to a method of forming the flossing device which has a floss in the shape of the numeral "8" or the symbol for infinity, comprising i) forming a floss portion in the shape of the numeral eight, the shape of said numeral comprising two loops touching each other at a junction area, wherein said two loops in fact form one physical body; ii) reinforcing said junction area and-or coating it; and iii) attaching one of said loops to a polymer gripping portion, the attachment being located at a distal part of the loop relatively to said junction. The method of the invention preferably comprises forming a means for delivering various substances to the oral cavity. The method may further comprise the steps of coating and/or reinforcing the floss. The junction area in the floss portion is preferably reinforced, sufficiently to penetrate the inter proximal spaces, possibly with an embedded wire or other consistency or by coating it with various strengthening means, hence enhancing rigidity as well as the ability to withstand the forces upon it as it works in and around the inter-proximal area. The junction area in the floss portion of the device may be coated with a membrane or sandwiched between two layers of a membrane (which will become one). In one aspect, the invention provides a method for forming a flossing device comprising a plurality of the flossing portions, which are mounted onto a dental comb.

The floss of the device of the invention is in a preferred embodiment impregnated with a material selected from flavor, antiseptic, pH modifier, and an agent affecting gingivitis. Said impregnating material may comprise menthol; it may comprise a peroxide, preferably a solid peroxide.

The present invention thus provides a flossing device in the shape of the numeral eight or the sign for infinity. The device of the invention is preferably formed of a polymeric material, and most preferably is coated with a reinforcement material or manipulated in a chemical and/or heat curing procedure while keeping its ability to elongate/contract while remaining relatively rigid, returning to it's original shape. For further strengthening the rigidity, a wire or membrane may be embedded in or surround the junction area. Generally, the invention relates to a flossing apparatus comprising a dental floss in the shape of the numeral eight, and to a method for forming such an apparatus, wherein said method includes steps of creating a figure "8" from a flossing ribbon, and connecting said figure with a gripping means.

### Brief Description of the Drawings

The above and other characteristics and advantages of the invention will be more readily apparent through the following examples, and with reference to the appended drawings, wherein:
- Fig. 1.: is a scheme illustrating the flossing device according to one embodiment of the invention;
- Fig. 2.: is a scheme illustrating the flossing device of the invention penetrating the interproximal space and maneuvered up/down, left/right and forward/backward, and the created "C" shape contact a portion of the front and back teeth.
- Fig. 3.: is a scheme illustrating an operation possibility of the flossing device of the invention, Fig. 3a showing tight adjoining of the device to the teeth-surface surrounding the inter proximal space, creating a "C" shape contact curvature, Fig. 3b illustrating the device flexibility during pulling it through the inter proximal space, Fig. 3c showing the return to the original form of the device when being pushed back, and Fig. 3d showing maintaining the device flexibility when pushing it still farther to the opposite direction;
- Fig. 4.: is a scheme illustrating an alternative addition to the flossing device of the invention, comprising a membrane around the junction area;
- Fig. 5.: is a scheme illustrating another embodiment of the flossing device of the invention;
- Fig. 6.: is a scheme illustrating another embodiment of the flossing device of the invention, comprising an apparatus providing automatic rotation or vibration, Fig. 6a showing mounting the device at one end, Fig. 6b showing mounting the device at both ends;
- Fig. 7.: is a scheme illustrating an embodiment of the invention, comprising a plurality of flossing devices mounted to form a dental comb;
- Fig. 8.: illustrates another embodiment of the flossing devise of the invention, in which said device additionally comprises flexible ribs that enable brushing of the gums area, Fig. 8a being a top view and Fig. 8b side view;
- Fig. 9.: schematically shows flexibility of the flossing device in one embodiment of the invention, the figure eight is in a spring like arch form pushing outwards; and

### Detailed Description of the Invention

In view of the numerous flossing devices of the prior art, the present invention provides for a novel device for flossing teeth, wherein the floss portion in said device is shaped like the numeral eight.

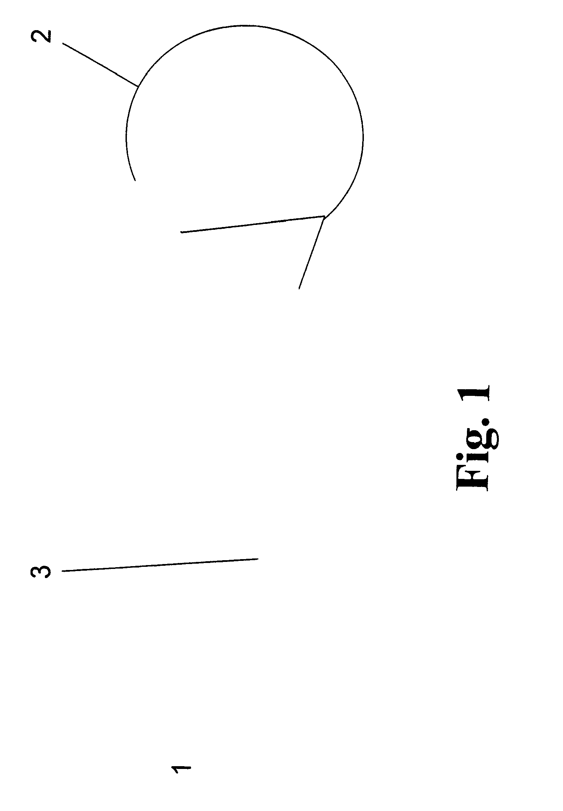

The invention consists of a flossing device comprising a floss portion (1) in the shape of the numeral eight or the sign for infinity and a griping portion (2), as shown in Figure 1. Said gripping portion might be jointed to enhance the user's ability to reach easily inter proximal spaces. The device preferably is made from a polymer, or other suitable material, and preferably is coated with a reinforcing material, such as Kevlar® fibers, for added strength, without compromising its elasticity and its ability to return to its original shape. Further to strengthen the rigidity of the device, a wire or wafer of sufficient capabilities may be embedded throughout the framework, or specifically in the junction area (3). For penetrating the inter-proximal space, one must align the junction area to the inter-proximal space, then force the junction area to overcome the initial resistance of the teeth, while forcing the junction area to contract and stretch (due to the applied forces and the friction of the teeth surfaces). The device then tries to return to it's original width and shape that is enabled by the space-abutting.

The width of the junction area in one preferred embodiment of the device is approximately 50-200 microns, which is intended to be able to penetrate the inter-proximal space between adjacent teeth.

The dental floss device of the present invention may be made of any suitable material known in the art. Suitable materials include polymers such as, but not limited to, acrylics, such as poly methyl methacrylate; polyolefins, such as polyethylene and polypropylene; polyesters or polyamides, such as comprising caproic acid; co-polyesters; polycarbonate, PTFE; and mixtures thereof.

The dental floss device of the invention may comprise expanded polytetrafluoroethylene having a high tensile strength; it may comprise other suitable polymeric matrix with a high strength known in the field; a coefficient of friction of the floss may be modified to increase the efficiency of the cleaning activity, for example, by adhering a microcrystalline wax to the surface of said polymer.

The grip portion and the floss portion of the device of the present invention may be made of the same material or different materials. Preferably, the floss portion is made of a material that is softer than the material from which the grip portion is made. The device of the present invention may be made by any suitable process known in the art, e.g. injection molding, or by coating fibers, using molds of required geometry.

The floss portion in the device of the present invention may be woven, ribbed, fluffy or otherwise multi-fiber, or may be impregnated with wax, or otherwise treated. The device may also comprise PTFE. The floss portion of the present device may be additionally coated e.g. with flavor additives and/or any pharmaceutical compound, the floss may be prepared from a material which is suitable for administrating various compositions to the mouth of the user, and/or to the inter-dental area, and/or the gum area in between two adjacent teeth.

In one of its aspects this invention relates to an improved combination of a dental floss device with the addition of a medicament. In another one of its aspects, this invention provides a device assisting tooth cleaning, and orally administrating a medicament, wherein said medicament may be a fluoride, a nicotine-based drug, a breath freshener, a base, a stomach acid inhibitor, an enamel whitener, a combination of the foregoing or any other therapeutic substance. The device combines use of a dental floss with oral administration of medical or cosmetic agents.

In a preferred embodiment, the device of the invention comprises a mint-type, flavored medicament, which will freshen the breath; an antacid medicament, which will reduce acid reflux as experienced by many; or a fluoride medicament, which will help prevent cavities.

Another aspect of this invention provides a package containing the dental floss-based tooth cleaning device and an agent for oral administration, medical or cosmetic.

In another aspect of this invention, provided is an improved dental floss device, which includes multicomponent co-extruded filaments and/or filaments having a multilobal cross-section. Optionally, the floss of the invention is capable of bulking.

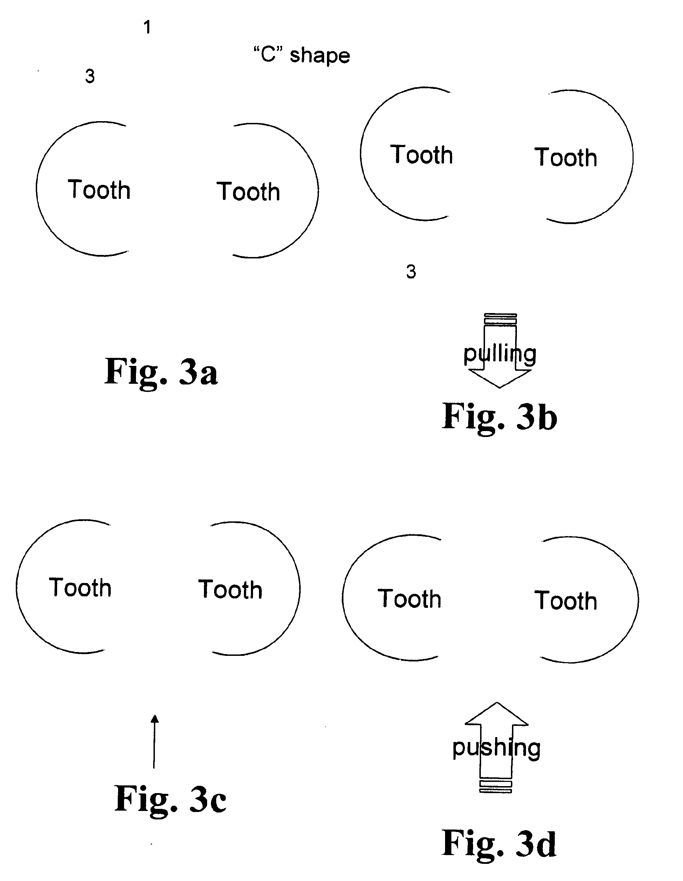

As a result of the unique geometric shape of the device, it is possible to perform flossing of the inter-proximal space, for example, using one hand, in an inward/outward and/or up/down movement of the device. As illustrated in Figure 2, the user must first penetrate the inter-proximal space using the middle of the numeral eight - the junction area (3). Afterwards, the device is moved up/down, left/right and forward/backward to achieve cleaning of the inter-proximal space. When the device of the invention is used, the figure eight flossing portion collapses and the resistance creates friction at a portion of the back and front of adjacent teeth - and not only between the teeth. In order to achieve best flossing results, the thickness of the floss used is chosen according to the inter-proximal spaces of the user, so that maximum contact is maintained between the teeth and the device (i.e. for wide spaces one would use thicker floss and vise versa). As illustrated in Figure 3, after inserting the device, in between the inter proximal space of two adjacent teeth, the device is under pressure from both sides by the teeth and has been squeezed sufficiently without loosing it's rigidity and basic form (Figure 3a). When the device is pulled towards one way, the opposite end collapses on to the teeth's surface area while creating friction (Figure 3b). In the meanwhile the junction area (3) of the device is creating friction hence cleaning in the inter proximal space. as a result of pushing the device back, it retains its basic shape (Figure 3c) and is ready for the next step of the flossing action; now the device is pushed towards the opposite direction, making the pushed upon end collapse on to the teeth's surface area while creating friction (Figure 3d). In the meanwhile the junction area (3) of the device is creating friction hence cleaning in the inter proximal space. Furthermore, the flossing action, utilizing the unique geometric shape of the device, creates a "C" shaped tangent to the surface area of the adjacent teeth, so as to cover the area to be cleaned. In contrast to various conventional dental flosses, the device of the invention not only enters the inter proximal space, but essentially abuts against the whole teeth-surface surrounding said inter-proximal space. The required rigidity of the device can be attained, even at the preferred thickness of 50-200 microns, by using known polymeric materials, eventually combined with reinforcing fibers, either fragmented or continuous. For example, reinforcement with Kevlar® fibers may provide the preferred flexibility and strength (e.g., elasticity module of 100 GPa, tensile strength of 3 GPa).

Furthermore, when addressing uneven spaces (e.g. crooked teeth) the device of the invention has a distinctive advantage where the loops of the numeral eight fill the inter-proximal spaces as the device is pulled or pushed, while creating friction and thus flossing. When using the device of the invention, while pulling and pushing it, the figure eight collapses and then returns to the original shape; the loops are not pulled through easily, the resistance creating friction at a portion of the back and front of adjacent teeth - and not only between the teeth. Notably, even when the teeth structure is such that the inter proximal space grows at the base (e.g. in crooked teeth) the figure eight shaped device of the invention fills the space, thus creating effective continuous flossing action.

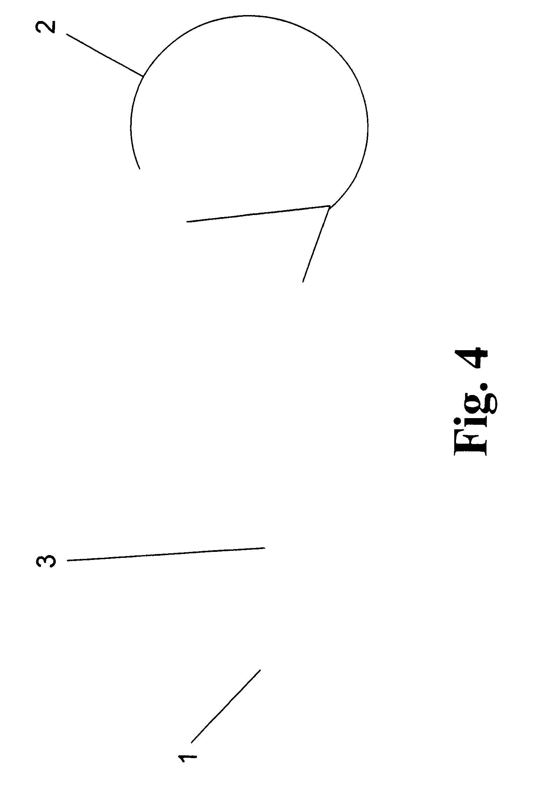

In one aspect, the device of the present invention can be augmented with a membrane at the junction area for added teeth-surface friction and rigidity, without compromising its ability to penetrate the inter proximal space. An example of a device according to the invention is presented schematically in Figure 4 to which the following description refers. The membrane (5) adds not only rigidity to the whole structure, especially the junction area (3), but a means to "hug" the surface areas of the teeth, and optionally delivering medicine. Preferably, an indication to replace and use a new device will be provided as the membrane falters. Preferably, the membrane profile will not be more than about 50-200 microns in thickness. The profile cross-section illustrated is the preferred profile design, at present, for enhancing rigidity and functionality.

An array of different holding surfaces may be attached to the device such as a pad, an elongated plastic cone, or a jointed, elbow type, with which it is easier to pivot and manipulate the device, etc.

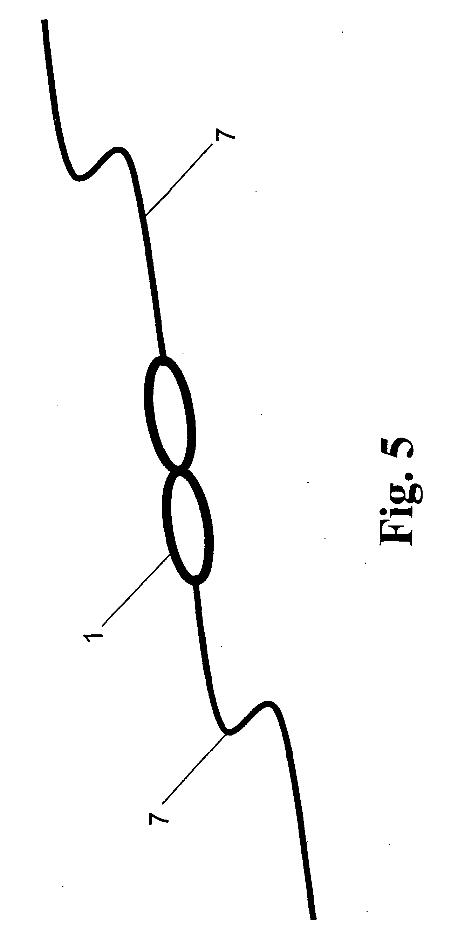

According to another embodiment of the invention, and as illustrated schematically in Figure 5, a thin rope/string (7) can be connected to the flossing portion (1) at each end of the numeral eight. Said points of connection between the strings and loops are reinforced to withstand the pulling forces during use. The user will insert the device in between the inter-proximal space and alternately pull each end of the rope, hence creating flossing action. In a preferred embodiment of the invention, said thin rope may optionally have a loop at each end, so that the user can place two fingers, i.e. a finger at each side of the flossing portion.

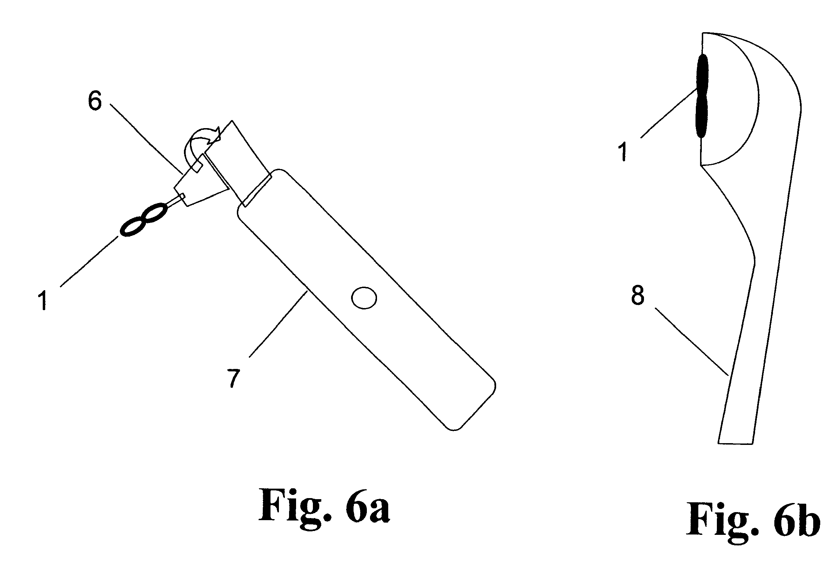

Alternatively, the device could be connected only at one end or between two opposing tongs. The device could than receive vibrating action/or not, as via a hand held electric vibrating machine. One example of such a device is presented schematically in Figure 6a, where the device (1) can be mounted at one end to the connector (6). Another example of such a device is presented schematically in Figure 6b, where the device (1) can be mounted at both ends, directly to the connector (6) or in between two plastic tongs. Said connector may be capable of rotating. Said connector, in turn, is fastened to a vibrating machine (7), preferably an electric or electronic vibrating device, which vibrates and/or rotates (via the connector) the device as it works in the inter-proximal space between adjacent teeth.

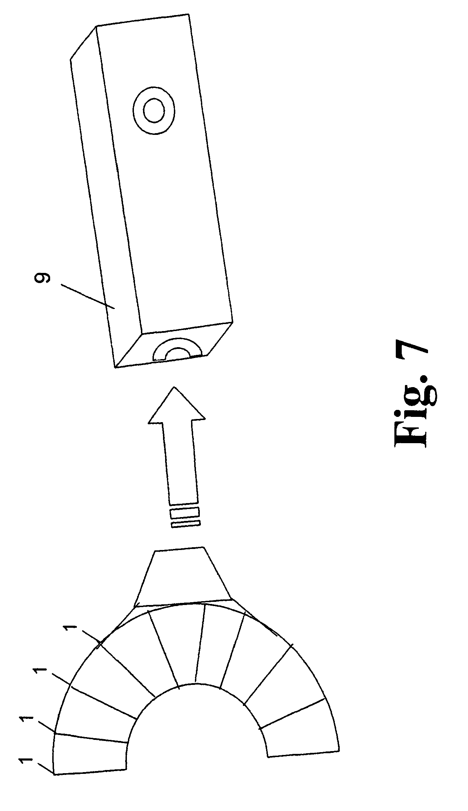

According to yet another embodiment of the invention, two or more of such devices could be mounted as part of a dental comb. As illustrated in Figure 7, each device (1) is distanced appropriately from its neighbors for substantially simultaneous treatment of all inter-proximal spaces of the teeth in the lower or upper jaw. The dental comb could, optionally, be connected to a vibration transfer machine (9), as shown. In A preferred embodiment, said devices are connected to said comb in a flexible manner in order to achieve better fit of the user's teeth. In yet another preferred embodiment, the distance between said devices could be adjusted and fixed to better fit the user's teeth.

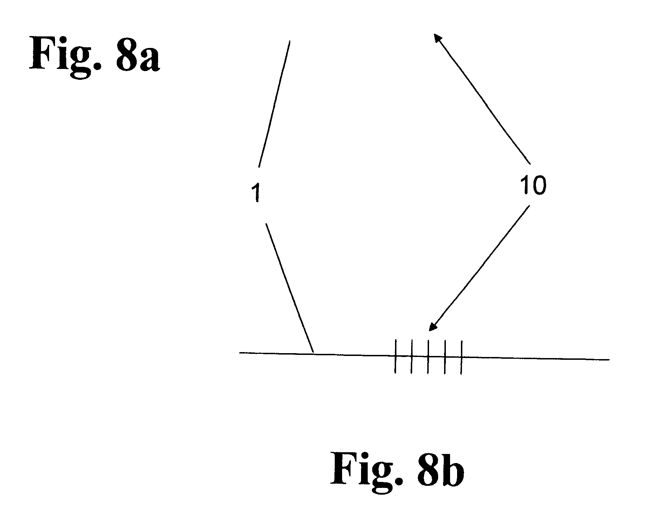

In another aspect, and as illustrated in Figure 8, flexible ribs (10) are part of the flossing device (1) of the present invention. Said ribs are located at either side of the junction area. Said ribs can enable the brushing action of the gums area in between two adjacent teeth while performing the flossing action.

According to anther embodiment of the invention, and as illustrated schematically in Figure 9, the figure eight flossing device of the invention (1) may be manipulated and held at a shorter distance than its relaxed length, forcing it to rise, thus creating a flexible arch, with a spring-like action (Figure 9a- prior to manipulation; 9b- side view; 9c- top view). Once the junction area is inserted in between the inter proximal space, flossing action is administered by the user utilizing the figure eight's special and unique flossing advantages

As used herein and throughout, the term "flossing portion" relates to a single floss unit, whereas the terms "loop/s" and "junction area" are used merely to describe the different areas in said flossing portion. Said junction describes the narrow part where the apparent two loops of the figure eight meet.

While this invention has been described in terms of some specific examples, many modifications and variations are possible. It is therefore understood that within the scope of the appended claims, the invention may be realized otherwise than as specifically described.

## Claims

1. A flossing device for cleaning inter-proximal teeth spaces, comprising an elastic dental floss in the shape of the numeral eight, and a gripping extension portion, said floss returning to its shape after being pushed or pulled through said inter-proximal spaces.

2. A device according to claim 1, wherein said floss is impregnated with a substance selected from the group consisting of a strong flavor substance, an antiseptic, an anti-gingivitis agent, a supporting agent for quitting smoking, a fluoride, a breath freshener, a pH modifier, a tooth whitener, a stomach acid inhibitor, and another therapeutic substance.

3. A flossing device, according to claim 1, comprising
i) a plurality of dental floss portions;
ii) a dental comb, in which the floss portions are mounted upon;
iii) a grip; and optionally
iv) a means for delivering a flavor and/or a therapeutic substance to the oral cavity;
wherein said dental floss portions are in the shape of the numeral eight.

4. A device according to claim 1, comprising a polymer selected from acrylics, polyolefins, polyesters, polyamides, polycarbonates, halogenated polyolefins, and mixtures thereof.

5. A device according to claim 4, wherein said polymer comprises an injection molded plastic.

6. A device according to claim 1, wherein the floss portion and/or the gripping portion are coated with a reinforcement material.

7. A device according to claim 1, said shape of the numeral eight comprising two loops touching each other at a junction area, wherein said junction area is reinforced.

8. A device according to claim 7, wherein said junction area is reinforced with a wire.

9. A device according to claim 7, wherein the area of said junction is coated with a membrane.

10. A device according to claim 1, wherein the floss is coated with microcrystalline wax.

11. A method of manufacturing the flossing device of claim 1, comprising
i) forming a floss portion in the shape of the numeral eight, the shape of said numeral comprising two loops touching each other at a junction area;
ii) optionally impregnating said floss with a substance selected from the group consisting of a strong flavor substance, an antiseptic, an anti-gingivitis agent, a supporting agent for quitting smoking, a fluoride, a breath freshener, a pH modifier, a tooth whitener, a stomach acid inhibitor, and another therapeutic substance;
iii) reinforcing said junction area and/or coating it;
iv) optionally reinforcing said floss portion and/or said griping portion by coating with a reinforcement material; and
v) attaching one of said loops to a polymer gripping portion, the attachment being located at a distal part of the loop relatively to said junction.

12. A method according to claim 11, wherein said step iii) comprises reinforcing with a wire.

13. A method according to claims 11, wherein said step iii) comprises coating with a membrane.

14. A method according to claims 11, further comprising a step of mounting a plurality of said floss portions onto a dental comb.

15. A flossing device according to claim 1, wherein said elastic dental floss exhibits flexibility and collapses onto the teeth's surface, when being pushed or pulled through said inter-proximal spaces, and essentially abuts against the whole teeth-surface surrounding said inter-proximal spaces.

## Patentansprüche

1. Eine Vorrichtung zum Reinigen von Zahnzwischenräumen mittels Zahnseide, umfassend
eine elastische Zahnseide in der Form der Ziffer Acht und einen Griff-Fortsatzabschnitt, wobei die Zahnseide in ihre Form zurückkehrt, nachdem sie durch die Zahnzwischenräume geschoben oder gezogen wurde.

2. Vorrichtung gemäß Anspruch 1, wobei die Zahnseide mit einem Stoff getränkt ist, ausgewählt aus der Gruppe bestehend aus: einem starken Geschmacksstoff, einem Antiseptikum, einem Mittel gegen Zahnfleischentzündung, einem Hilfsmittel, um mit dem Rauchen aufzuhören, einem Fluorid, einem Atemerfrischer, einem PH-Modifizierungsmittel, einem Zahnweißungsmittel, einem Magensäure-Hemmer, und einem anderen therapeutischen Stoff.

3. Eine Vorrichtung zum Reinigen von Zähnen mittels Zahnseide gemäß Anspruch 1, umfassend:
i) mehrere Abschnitte von Zahnseide;
ii) einen Dentalkamm, in dem die Zahnseidenabschnitte angebracht sind;
iii) einen Griff; und optional
iv) ein Mittel zum Zuführen eines Geschmacksstoffs oder eines therapeutischen Stoffes in die Mundhöhle;
wobei die Zahnseidenabschnitte in der Form der Ziffer Acht vorliegen.

4. Vorrichtung gemäß Anspruch 1, umfassend ein Polymer, ausgewählt aus Acrylen, Polyolefinen, Polyestern, Polyamiden, Polycarbonaten, halogenierten Polyolefinen und Mischungen davon.

5. Vorrichtung gemäß Anspruch 4, wobei das Polymer einen spritzgegossenen Kunststoff umfasst.

6. Vorrichtung gemäß Anspruch 1, wobei der Zahnseidenabschnitt und/oder der Griffabschnitt mit einem Verstärkungsmaterial beschichtet sind.

7. Vorrichtung gemäß Anspruch 1, wobei die Form der Ziffer Acht zwei Schlaufen umfasst, die sich in einem Verbindungsbereich berühren, wobei der Verbindungsbereich verstärkt ist.

8. Vorrichtung gemäß Anspruch 7, wobei der Verbindungsbereich durch Draht verstärkt ist.

9. Vorrichtung gemäß Anspruch 7, wobei der Verbindungsbereich mit einer Membran beschichtet ist.

10. Vorrichtung gemäß Anspruch 1, wobei die Zahnseide mit mikrokristallinem Wachs beschichtet ist.

11. Verfahren zum Herstellen der Vorrichtung zum Reinigen von Zähnen mittels Zahnseide nach Anspruch 1, umfassend:
i) Bilden eines Zahnseideabschnitts in der Form der Ziffer Acht, wobei die Form der Ziffer zwei Schlaufen umfasst, die sich an einem Verbindungsbereich berühren;
ii) optional Tränken der Zahnseide mit einer Substanz, ausgewählt aus der Gruppe bestehend aus einen starken Geschmacksstoff, einem Antiseptikum; einem Mittel gegen Zahnfleischentzündung, einem Hilfsmittel, um mit dem Rauchen aufzuhören, einem Fluorid, einem Atemerfrischer, einem PH-Modifizierungsmittel, einem Zahnweißungsmittel, einem Magensäure-Hemmer und einem anderen therapeutischen Stoff;
iii) Verstärken des Verbindungsbereichs und/oder Beschichten des Verbindungsbereichs;
iv) optional Verstärken des Zahnseideabschnitts und/oder des Griffabschnitts durch beschichten mit einem Verstärkungsmaterial; und
v) Anbringen einer der Schlaufen an einen Polymer-Griffabschnitt, wobei die Anbringung an einem in Bezug auf die Verbindung distalen Teil der Schlaufe angeordnet ist.

12. Verfahren gemäß Anspruch 11, wobei der Schritt iii) ein Verstärken mit einem Draht umfasst.

13. Verfahren gemäß Anspruch 11, wobei der Schritt iii) ein Beschichten mit einer Membran umfasst.

14. Verfahren gemäß Anspruch 11, weiter umfassend einen Schritt des Anbringens mehrerer der Zahnseideabschnitte auf einem Dentalkamm.

15. Eine Vorrichtung zum Reinigen von Zähnen mittels Zahnseide gemäß Anspruch 1, wobei die elastische Zahnseide eine Flexibilität zeigt und auf der Zahnoberfläche zusammensinkt, wenn sie durch die Zahnzwischenräume geschoben oder gezogen wird und im Wesentlichen gegen die gesamte Zahnoberfläche anliegt, die die Zahnzwischenräume umgibt.

## Revendications

1. Dispositif de fil dentaire pour nettoyer les espaces dentaires interproximaux, comprenant un fil dentaire élastique ayant la forme du chiffre huit, et une partie prolongée de saisie, ledit fil dentaire reprenant sa forme après avoir été poussé ou tiré dans lesdits espaces interproximaux.

2. Dispositif selon la revendication 1, où ledit fil est imprégné d'une substance sélectionnée à partir du groupe comprenant une substance au goût fort, un antiseptique, un agent anti-gingivite, un agent de soutien pour aider à arrêter le tabac, un fluorure, un rafraîchisseur d'haleine, un modificateur de pH, un blanchisseur de dents, un inhibiteur d'acidités d'estomac, et une autre substance thérapeutique.

3. Dispositif de fil dentaire selon la revendication 1, comprenant
i) une pluralité de parties de fil dentaire ;
ii) un peigne dentaire, sur lequel les parties du fil sont montées ;
iii) une poignée; et en option
iv) un moyen pou fournir un goût et/ou une substance thérapeutique à la cavité orale ;
où lesdites partie du fil dentaire ont la forme du chiffre huit ;

4. Dispositif de fil dentaire selon la revendication 1, comprenant un polymère sélectionné à partir d'acryliques, de polyoléfines, de polyesters, de polyamides, de polycarbonates, de polyoléfines halogénées et de mélanges de ceux-ci.

5. Dispositif selon la revendication 4, où ledit polymère comprend un plastique moulé par injection.

6. Dispositif selon la revendication 1, où la partie du fil dentaire et/ou la partie de saisie est recouverte d'un matériau de renfort.

7. Dispositif selon la revendication 1, ladite forme de chiffre huit comprenant deux boucles se touchant l'une l'autre à une zone de jonction, où ladite zone de jonction est renforcée.

8. Dispositif selon la revendication 7, où ladite zone de jonction est renforcée avec un fil.

9. Dispositif selon la revendication 7, où ladite zone de jonction est recouverte d'une membrane.

10. Dispositif selon la revendication 1, où le fil dentaire est recouvert de cire microcristalline.

11. Procédé de fabrication du dispositif de fil dentaire de la revendication 1, comprenant
i) la formation d'une partie de fil dentaire de la forme du chiffre huit, la forme dudit chiffre huit comprenant deux boucles se touchant l'une l'autre à une zone de jonction ;
ii) l'imprégnation optionnelle d'une substance sélectionnée à partir du groupe comprenant une substance au goût fort, un antiseptique, un agent anti-gingivite, un agent de soutien pour aider à arrêter le tabac, un fluorure, un rafraîchisseur d'haleine, un modificateur de pH, un blanchisseur de dents, un inhibiteur d'acidités d'estomac, et une autre substance thérapeutique.
ii) le renforcement de ladite zone de jonction et/ou le recouvrement de celle-ci ;
iv) le renforcement optionnel de ladite partie de fil dentaire et/ou de ladite partie de saisie en la recouvrant d'un matériau de renfort; et
v) la fixation de l'une de ces boucles à une partie de saisie en polymère, la fixation étant située à une partie distale de la boucle relativement à ladite jonction.

12. Procédé selon la revendication 11 où ladite étape iii) comprend le renforcement avec un fil.

13. Procédé selon la revendication 11 où ladite étape iii) comprend le recouvrement avec une membrane.

14. Procédé selon la revendication 11, comprenant en outre une étape de montage d'une pluralité desdites parties de fil dentaire sur un peigne dentaire.

15. Dispositif de fil dentaire selon la revendication 1, où ledit fil dentaire élastique montre de la flexibilité et se plie sur la surface des dents, quand il est poussé ou tiré par lesdits espaces interproximaux, et est situé essentiellement contre la surface entière de la dent entourant lesdits espaces interproximaux.
